# EUROPÄISCHE PATENTSCHRIFT

(11) **EP 2 799 265 B1**
(45) Veröffentlichungstag und Bekanntmachung des Hinweises auf die Patenterteilung: **03.04.2019**
(21) Anmeldenummer: 13166535.8
(22) Anmeldetag: 03.05.2013
(51) Int. Cl.: B60J 5/04

(54) **Türrahmenmodul für eine modular aufgebaute Kraftfahrzeugtür und modular aufgebaute Kraftfahrzeugtür mit einem solchen Türrahmenmodul**
Door frame module for a modularly structured motor vehicle door and modularly structured motor vehicle door comprising such a door frame module
Module de châssis de porte pour une porte de véhicule automobile conçue de façon modulaire et porte de véhicule automobile conçue de façon modulaire dotée d'un tel module de châssis de porte

(43) Veröffentlichungstag der Anmeldung: 05.11.2014
(73) Patentinhaber: DURA Automotive Holdings U.K., Ltd., Birmingham, B35 7AG (GB)
(72) Erfinder: Schulte, Martin, 58802 Balve (DE); Schulte, Christian, 57368 Lennestadt (DE)
(74) Vertreter: Bungartz Christophersen Partnerschaft mbB Patentanwälte

(56) Entgegenhaltungen:
- EP-A1- 0 170 150
- WO-A1-03/086795
- US-A1- 2007 125 003

## Beschreibung

Die Erfindung betrifft den modularen Aufbau einer Kraftfahrzeugtür.

Dem in der Automobilfertigung tätigen Fachmann sind Vorteile, die eine Modulbauweise von komplexeren Bauteilstrukturen mit sich bringen kann, bekannt. Hierzu gehört aus Sicht des Herstellers insbesondere der Vorteil, dass derartige Systembaugruppen vormontiert von einem Zulieferer montagefertig ans Band angeliefert werden können. Der Zulieferer verfügt auf seinem speziellen Gebiet der Technik über das bessere Knowhow und eine spezialisiertere Fertigung. Durch den hohen Individualisierungsgrad derartiger Systembaugruppen und deren Anlieferung "just in time" an die Fertigungsstraße des Herstellers verringert sich der Logistikaufwand für den Fahrzeughersteller erheblich und die jeweiligen Fahrzeugtypen können dem Kunden stark individualisierbar angeboten werden. Im Rahmen dieser Überlegungen gab es in den letzten Jahrzehnten vermehrt den Trend hin zu Systemzulieferern, die für das jeweilige Fahrzeug Systembaugruppen gemeinsam mit dem Hersteller entwickeln und schließlich weitgehend einbaufertig liefern. Typische Beispiele für derartige modulare Systemträger sind Cockpitsysteme, die von der Stirnwand bis zur Mittelkonsole vormontiert angeliefert werden, komplett vormontierte Achsen und Antriebsstränge, Frontend Module oder Sitzbaugruppen.

Auch Fahrzeugtüren sind komplexe Systemträger geworden, etwa für Untersysteme wie Öffnungs-/Schließsysteme (Schließmechanik und -elektronik, äußerer und innerer Türgriff samt angeschlossener Mechanik), Hebe-/Senksysteme (Fenster, Motoren, Führungen, Dichtungen), Systeme, die die passive Sicherheit betreffen (Seitenaufprallschutz, Airbags), Infotainmentsysteme (Lautsprecher), Bedien- und Komfortsysteme (Sitzverstellung, Außenspiegelverstellung), Innenverkleidung, etc. Das Knowhow für die einzelnen Komponenten und Module eines solchen Systemträgers und für dessen Integration in die Fertigung liegt längst nicht mehr allein beim Hersteller, sondern verteilt sich auf verschiedene, gegenüber dem Hersteller spezialisiertere Zulieferer.

Modular aufgebaute Kraftfahrzeugtüren sind aus den Druckschriften EP 0 170 150 A1, WO 03/086795 A1 und US 2007/0125003 A1 bekannt. Die darin offenbarten Konstruktionen beschäftigen sich allerdings überwiegend mit eng umrissenen Detaillösungen und bleiben hinsichtlich eines Einsatzes von zu Metallen alternativen Werkst und den hiermit erzielbaren Vorteilen hinter bestehenden Möglichkeiten zurück.

Die Erfindung macht es sich zur Aufgabe, ein Türmodul für eine modular aufgebaute Fahrzeugtür anzugeben, dass vorteilhaft für die Montage des Kraftfahrzeugs ist und dem Hersteller verbesserte Optionen hinsichtlich der Fahrzeugfertigung und Individualisierbarkeit bietet. Ferner macht es sich die Erfindung zur Aufgabe, den Aufbau einer Fahrzeugtür dahingehend zu verbessern, dass Entwicklung und Fertigung einzelner Module bzw. Untersystemträger besser auf unterschiedliche, für das jeweilige Untersystem spezialisierte Zulieferer verteilt werden kann.

Zur Lösung dieser Aufgaben schlägt die Erfindung einen Aufbau einer Kraftfahrzeugtür mit einem Türrahmenmodul mit den Merkmalen des Anspruchs 1 vor.

Danach ist Türrahmenmodul zur Anbringung an ein Rohbaumodul, dass die äußere Karosseriehaut einer modular aufgebauten Fahrzeugtür bildet und das bei komplettierter Fahrzeugtür eine Brüstungslinie definiert, vorgesehen, wobei das Türrahmenmodul ein Rahmenteil umfasst, das bei komplettierter Fahrzeugtür oberhalb der Brüstungslinie einen Fensterrahmen und unterhalb der Brüstungslinie einen Stützrahmen ausbildet, über den das Türrahmenmodul bestimmungsgemäß innenseitig am Rohbaumodul zu befestigen ist. Dabei ist das Türrahmenmodul ausgebildet, als vom Rohbaumodul separates Bauteil an dem endlackierten Rohbaumodul befestigt zu werden, wobei der Stützrahmen eine Befestigungsaufnahme für ein vom Türrahmenmodul separates und als Komponententräger dienendes Funktionsmodul ausbildet, wobei hoch belastete Bereiche des Stützrahmens oder des Fensterrahmens können gezielt durch Verstärkungselemente verstärkt werden.

Ein derartiges Türrahmenmodul bietet die Möglichkeit, die die Fahrzeugtür komplettierenden Systembaugruppen in konstruktiver Hinsicht losgelöst von den Anforderungen des Lackierprozesses gestalten zu können. So werden Designverbesserungen ermöglicht, die bei notwendiger Berücksichtigung der Anforderungen des Lackierprozesses und der herkömmlichen Blechformteil- und Profilbauweise nicht umsetzbar wären. Durch die beschriebene Konstruktion werden neue Schnittstellen definiert, durch die sich einzelne Module besser voneinander abgrenzen und unterschiedlichen Zulieferern mit jeweils spezielleren, für das jeweilige Modul benötigten Kompetenzen zuweisen lassen, was eine gezieltere und kompetenzorientierte Zuliefererauswahl ermöglicht.

Ein weiterer Vorteil eines solchen Moduls besteht darin, dass dieses miteinander zusammenwirkende Einzelkomponenten in einer Baugruppe vereint, so dass eine bessere Abstimmung der Einzelkomponenten aufeinander möglich ist (zum Beispiel im Hinblick auf Funktionstoleranzen bei Scheibenführungen, Scheibenführungsdichtungen, Scheibe und Hebemechanik). Die Notwendigkeit einer Baugruppen bzw. Modul übergreifenden Abstimmung wird damit erheblich reduziert. Die Verantwortung für die Einzelkomponenten und deren Zusammenwirken liegt weitgehend in einer Hand bzw. bei einem einzigen Zulieferer.

Dass die Karosserieaußenhaut bildende und in Wagenfarbe zu lackierende Rohbaumodul, das als klassisches "Body in White" Blechbauteil und als Bestandteil der Rohkarosserie den Lackierprozess beim Hersteller durchläuft, kann wiederrum in konstruktiver Hinsicht einfacher und damit auch gewichtsmäßig leichter ausgestaltet sein, denn eine Vielzahl von Funktionen, die üblicherweise an einem solchen Rohbaumodul konstruktiv abgebildet werden müssen (Flansche oder Aufnahmen für Dichtungen, Trag- und Befestigungsstrukturen für Feuchtraum verträgliche Funktionsbauteile der Schließ- oder Fensterhebemechanik, Ausbildung eines Fensterrahmens, Aufnahme des Fensterglases, etc.), können fast vollständig auf das Türrahmenmodul verlagert werden. Diese Integrationsmöglichkeit bietet nicht nur Leichtbaupotenziale, sondern trägt auch dazu bei, das Handling des Rohbaumoduls im Fertigungsprozess zu vereinfachen, indem das Rohbaumodul aufgrund der verringerten konstruktiven Komplexität einfacher ausgestaltet und gefertigt werden kann und indem die Komplettierung der Fahrzeugtür nur noch die Montage weniger vormontiert angelieferter Systemmodule erfordert.

Das Rohbaumodul ist bevorzugt als Bestandteil des Karosserierohbaus ein in Blechbauweise ausgebildetes Bauteil (Stahl oder Aluminium) und dient der Erreichung der strukturellen Steifigkeit und der Crashwiderstandfähigkeit bzw. der Aufnahme und/oder Ausbildung von Seitenaufprallschutzstrukturen. Es bildet die am fertigen Kraftfahrzeug von außen sichtbare und in Wagenfarbe lackierte Karosserieaußenhaut. Die Türscharniere sind bevorzugt am Rohbaumodul befestigt.

Das Türrahmenmodul wird erst nach erfolgter Lackierung dem Fertigungsprozess zugeführt und mit dem fertig lackierten Rohbaumodul in geeigneter Weise verbunden. In Frage kommt neben mechanischen Verbindungselementen, also insbesondere Schrauben und/oder Nieten, auch das Verkleben des Türrahmenmoduls mit dem Rohbaumodul. Besonders bevorzugt wird eine kombinierte Verbindung aus mechanischen Verbindungsmitteln und einer Verklebung, bei der das Türrahmenmodul sowohl über die Verklebung als auch über die mechanischen Verbindungsmittel an dem Rohbaumodul befestigt wird.

Das erfindungsgemäße Türrahmenmodul is aus Kunststoff hergestellt und kann aus einem einzigen, einstückigen Formbauteil bestehen. Es können aber selbstverständlich auch mehrere Einzelteile vorgesehen sein, die zur Komplettierung des Türrahmenmoduls zusammengefügt sein können. Als Werkstoffe kommen insbesondere faserverstärkte Kunststoffe in Frage, die bevorzugt durchgefärbt sind und vorzugsweise in schwarzer Farbe verwendet werden. Vorteilhaft kommen Thermoplaste wie Polyamide oder Polypropylen zum Einsatz, die in einer bevorzugten Ausgestaltung auch faserverstärkt sein können. Der Einsatz von Thermoplasten hat unter anderem auch Vorteile mit Blick auf eine angestrebte hohe Recyclingfähigkeit des Moduls.

Für das Türrahmenmodul verwendete Kunststoffbauteile, insbesondere Profile für den Fensterrahmen, können insbesondere pultrudiert werden. Das Pultrusionsverfahren eignet sich gut, um (relativ) preisgünstig faserverstärkte Kunststoffprofile herzustellen.

Nicht ausgeschlossen ist es aber, dass für die Bestandteile des Türrahmenmoduls duroplastische, faserverstärkte Formmassen zum Einsatz kommen, beispielsweise Sheet Moulding Compounds (SMC Formassen) oder Bulk Moulding Compounds (BMC Formmassen), über die sich das Türrahmenmodul oder Teile hiervon im Spritzguss-, im Spritzpräge- oder im Spritzpressprozess herstellen lassen.

Insbesondere für die Herstellung des Fensterrahmens kommen neben den vorstehend genannten Materialien und Fertigungsverfahren aber auch stranggepresste Profile aus Leichtmetallen oder Stahlbauteile, insbesondere rollprofilierte Stahlprofile in Frage.

Hoch belastete Bereiche des Stützrahmens oder des Fensterrahmens werden in der Erfindung gezielt durch Verstärkungselemente wie Metallblecheinleger, Organobleche oder Langfasermatten verstärkt.

Insbesondere bei dem Einsatz der zuvor genannten Kunststoffmaterialien ist es möglich, dass der der Fensterrahmen mit zumindest einem Teil seiner zum Fahrzeugäußeren und/oder zum Fahrzeuginneren weisenden, bei komplettierter Fahrzeugtür sichtbaren Oberflächen Dekorflächen bildet. Dekorflächen sind in diesem Zusammenhang oberflächenseitig "fertige", das heißt nicht mehr durch Nachlackieren nachzubehandelnde oder durch nachträgliche Abdeckungen optisch zu kaschierende Flächen, die am fertig gestellten Fahrzeug bei geöffneter oder bei geschlossener Tür von außen oder innen sichtbar sind und das Erscheinungsbild der Tür optisch mitprägen. Derartige Dekorflächen können als Hochglanzoberflächen oder aber als Strukturoberflächen mit einer gezielt eingebrachten Struktur oder Narbung ausgebildet sein. Auf den zusätzlichen Einsatz von Zier- oder Abdeckleisten oder sonstigen Verkleidungs- oder Karosserieanbauteilen kann demnach entweder ganz verzichtet oder deren Verwendung kann zumindest reduziert werden.

Besonders vorteilhaft ist dies für die bei geschlossener Fahrzeugtür nicht zum Fahrzeugäußeren hin weisenden Dekorflächen des Türrahmenmoduls, insbesondere bei denjenigen Flächen, die bei geschlossener Fahrzeugtür durch die Karosseriestruktur, insbesondere die Türmulde, verdeckt sind. Diese werden erst bei Öffnen der Tür sichtbar, prägen aber, da sie sich bei jedem Einsteigen im unmittelbaren Blickfeld befinden, den optischen Eindruck des Bauteils erheblich mit.

Die Bestandteile des Türrahmenmoduls, die die Dekorflächen bilden, also insbesondere der Stützrahmen und der Fensterrahmen, können als Mehrkomponenten-Bauteile ausgebildet sein und zumindest in dem die Dekorflächen bildenden Bereich einen mehrschichtigen Aufbau mit zumindest einer ersten, inneren Schicht aus einem ersten Material und einer zweiten, äußeren Schicht aus einem zweiten Material aufweisen. Bevorzugt ist die erste, innere Schicht aus einem die mechanische Grundstabilität des Bauteils gewährleistenden ersten Material hergestellt. Insbesondere wird also der eigentliche Querschnitt des Bauteils, zum Beispiel der des Fensterrahmens oder der des Stützrahmens, von dem die erste, innere Schicht bildenden Material gebildet bzw. hiervon maßgeblich bestimmt. Die zweite, äußere Schicht ist auf die erste, innere Schicht aufgebracht und bildet die zuvor beschriebene Dekorfläche.

Ein derartiges Mehrkomponenten-Verbundbauteil kann auf verschiedene Weise hergestellt werden, so zum Beispiel im Mehrkomponenten-Spritzguss, bei dem ein erster Kunststoff als erstes Material einen inneren Bereich des Stützrahmen bzw. des Fensterrahmens bildet, der anschließend mit einer Lage eines zweiten Kunststoffs überspritzt wird. Als zweiter Kunststoff kann dabei auch ein sehr kratzresistenter, eher spröder Kunststoff zum Einsatz kommen, der zwar die geforderte Oberflächenqualität der Dekorfläche gewährleisten kann, der allerdings alleine die vom Stützrahmen bzw. Fensterrahmen ebenfalls geforderte mechanische Grundstabilität, insbesondere also die Bruchsicherheit bzw. Duktilität, nicht gewährleisten würde. Diese Eigenschaften steuert der erste Kunststoff bei.

Als weiteres Verfahren zur Herstellung von Bestandteilen des Türrahmenmoduls bietet sich ein Verfahren an, bei dem das erste Material im Herstellungswerkzeug, also zum Beispiel im Spritzgusswerkzeug, mit einem Lack (bevorzugt lösungs- und/oder trennmittelfrei) bzw. einem Schaum (beides bevorzugt auf Polyurea-Basis) überflutet bzw. überschäumt und somit veredelt wird. Eine solche Kombination von Urformverfahren und Reaktionstechnik ermöglicht die einstufige Herstellung von Mehrkomponenten-Bauteilen unter Wegfall von sonst nötigen Herstellungsschritten, insbesondere unter Wegfall einer ansonsten nötigen Nasslackierung mitihren bekannten Nachteilen.

Alternativ oder zusätzlich zu den vorstehend genannten Verfahren zur Herstellung eines Mehrkomponenten-Bauteils kann der Fensterrahmen in bestimmten Bereichen derart ausgestaltet sein, dass der Fensterrahmen ein Grundprofil aufweist, auf den ein Abdeckteil in Form eines Zierteils oder eine Blendenleiste aufgesetzt ist. Insbesondere kann der Teil des Türrahmenmoduls, der die B- oder C-Säule der Fahrzeugkarosserie bei am Fahrzeug montierter Tür überdeckt und der einen Teil der zum Fahrzeugäußeren weisenden Dekorfläche des Fensterrahmens bildet, dadurch gebildet sein, dass auf das Grundprofil des Fensterrahmens in dem Bereich, der der B- oder C-Säule eine Blende aufgesetzt ist. Die Verbindung von Grundprofil und Abdeckteil erfolgt bevorzugt stoffschlüssig, also insbesondere durch Verkleben. Auch in diesem Fall kann das Abdeckteil aus einem die geforderte hohe Oberflächengüte gewährleistenden zweiten Kunststoff hergestellt sein, während das Grundprofil aus einem die Bruchsicherheit bzw. Duktilität gewährleistenden ersten Kunststoff hergestellt ist.

Außerdem können die bei herkömmlichem Fahrzeugtüraufbau vorzusehenden Zier- bzw. Abdeckteile wie zum Beispiel eine A- oder B-Säulenblende dadurch, dass diese Bauteile vorteilhaft von dem Türrahmenmodul, insbesondere von dem Fensterrahmen, unmittelbar ausgebildet werden und demnach integraler, werkstoffeinstückiger Bestandteil des Moduls sind, neben ihrer dekorativen Zierfunktion auch strukturelle Aufgaben übernehmen, was zum Beispiel bei einer herkömmlichen, als bloßes Aufsetzteil konzipierten Blendenleiste nicht möglich ist.

Das Funktionsmodul dient als Komponententräger für im Trockenraum zu platzierende Funktionskomponenten (insbesondere elektrische Komponenten) und wird an dem Türrahmenmodul befestigt. Die am Türrahmenmodul vorgesehene Befestigungsstruktur ist bevorzugt dergestalt ausgebildet, dass das Funktionsmodul ausschließlich am Türrahmenmodul befestigt wird, also keine unmittelbare Verbindung zwischen Funktionsmodul und Rohbaumodul besteht. Das Funktionsmodul weist in einer vorteilhaften Ausgestaltung eine Komponententrägerplatte auf, die bei komplettierter Fahrzeugtür mehrere Funktionskomponenten gleichzeitig trägt. Ferner dient es der Trennung von Feucht- und Trockenraum bzw. als Bindeglied zwischen diesen beiden Räumen. Auf der äußeren, dem Fahrzeuginnenraum abgewandten Seite bildet es zusammen mit dem Türrahmenmodul und dem Rohbaumodul einen inneren Türkasten aus, der den Feuchtraum definiert.

Als weiterer Bestandteil des modularen Fahrzeugtüraufbaus ist die Innenverkleidung bzw. deren Teile zu nennen, die auf dem Funktionsmodul aufgesetzt sein oder mit diesem eine integrative Einheit bilden können. In letzterem Fall umfasst das Funktionsmodul auf die Innenverkleidung oder zumindest Teile hiervon.

Vorteilhaft bilden der Stützrahmen und der Fensterrahmen ein umlaufendes Rahmenteil, was dem Türrahmenmodul eine gute Steifigkeit verleiht.

Der unterhalb der Brüstungslinie den Stützrahmen bildende U-förmig verlaufende Teil des Türrahmenmoduls definiert unterhalb der Brüstungslinie zumindest teilweise die Seitenflächen eines inneren Türkastens, der bei komplettierter Fahrzeugtür, also nach der Befestigung des Türrahmenmoduls am Rohbaumodul und nach Aufsetzen des Funktionsmoduls auf das Türrahmenmodul, den Feuchtraum bildet. Wenn der Stützrahmen mit dem Fensterrahmen ein umlaufendes Rahmenteil bildet, ist das unter anderem vom Stützrahmen begrenzte Feuchtraumvolumen in vorteilhafter Weise durch den Stützrahmen seitlich umlaufend geschlossen, wobei Öffnungen oder Durchtritte für Funktionsteile (Zugriff auf die Hebe-/Senkfunktion des Fensters oder den Schließmechanismus, etc.) oder zur Feuchtigkeitsableitung vorgesehen sein können. Ferner ist natürlich zu gewährleisten, dass die Fensterscheibe nach oben aus dem Feuchtraum heraus- oder nach unten in den Feuchtraum hineinfahren kann.

Der Stützrahmen kann in Höhe der Brüstungslinie, bevorzugt parallel zu dieser und bevorzugt unterhalb der Brüstungslinie, ein Querprofil aufweisen, das dem Türrahmenmodul zusätzlich Stabilität verleiht und außerdem auch zur Befestigung des Türrahmenmoduls am Rohbaumodul und/oder als zusätzliche Befestigungsaufnahme für das Funktionsmodul dienen kann. Das Querprofil kann insbesondere den Stützrahmen einstückig oder als ursprünglich separates Bauteil komplettieren und mit dem Stützrahmen einen umlaufend geschlossenen, bevorzugt unter der Brüstungslinie liegenden Aufsetzrahmen bilden, über den das auf das Rohbaumodul aufgesetzte Türrahmenmodul am Rohbaumodul gehalten wird. Das Querprofil kann selbstverständlich auch Befestigungsstrukturen für das Funktionsmodul aufweisen.

Das Querprofil dient außerdem auch der Erfüllung von Frontcrash-Anforderungen, in dem es Kräfte, die über den Stoßfänger in den Längsträger eingeleitet werden, zusätzlich zur Dach- und Bodengruppe der Karosserie aufnimmt und parallel zu diesen Strukturen in die hintere Karosserie ableitet.

Die Erfindung ermöglicht demnach insgesamt die Integration von Zier- oder Blendenleisten, der kompletten Scheibenbaugruppe sowie des kompletten Dichtungsumfangs in ein einziges Modul, das vormontiert von nur einem einzigen Zulieferer unter gebündelter Verantwortung hergestellt wird.

In den Figuren zeigen
- Fig. 1: ein Rohbaumodul, ein Türrahmenmodul und ein Funktionsmodul einer modular aufgebauten Fahrzeugtür,
- Fig. 2: eine modulare Fahrzeugtür in der Seitenansicht,
- Fig. 3: eine schematische Zeichnung gemäß der Schnittlinie III - III in Figur 2,
- Fig. 4: eine Schnittansicht an der in Fig. 2 angedeuteten Schnittlinie IV - IV, und
- Fig. 5: eine Schnittansicht einer herkömmlichen, aus dem Stand der Technik bekannten Türkonstruktion (Fig. 5a) in Gegenüberstellung mit einer erfindungsgemäß hergestellten Türkonstruktion (Fig. 5b) an einer Stelle, die der in Figur 2 angedeuteten Schnittlinie V - V entspricht.

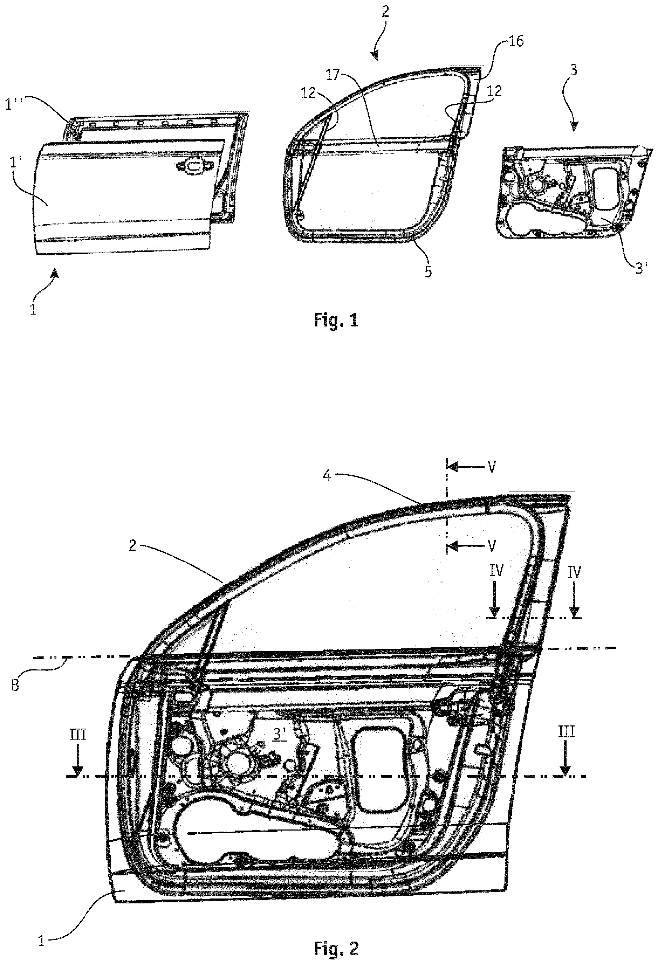

In Figur 1 sind drei Module einer modular aufgebauten Fahrzeugtür gezeigt. Ein äußeres Blechformteil 1' und ein inneres Blechformteil 1" komplettieren nach dem Zusammenfügen das Rohbaumodul 1, das als BIW-Bauteil den Lackierprozess beim Hersteller durchläuft. Ein Türrahmenmodul 2, das innenseitig auf das Rohbaumodul 1 aufgesetzt wird und ein Funktionsmodul 3 komplettieren die Fahrzeugtür weitgehend.

Nicht gezeigt ist die für die vollständige Komplettierung der Fahrzeugtür vorzusehende Innenverkleidung, die mit dem Funktionsmodul eine integrative Einheit bilden kann oder als separates Modul auf dieses aufgesetzt werden kann. Aus Übersichtlichkeitsgründen ebenfalls nicht gezeigt sind an den jeweiligen Modulen vor deren Zusammenbau angeordnete Funktionselemente oder Anbauten. Figur 2 zeigt die Module aus Figur 1 übereinandergelegt, wobei in Bezug auf die Zeichenebenen das Rohbaumodul 1 vorne, das Türrahmenmodul 2 in der Mitte und das Funktionsmodul 3 hinten angeordnet ist.

Das Rohbaumodul 1 ist in Blechbauweise ausgebildet und trägt ganz überwiegend zur strukturellen Steifigkeit und der Crashsicherheit bei. Es trägt bevorzugt ein Türscharnier, über das die Fahrzeugtür gelenkig mit der Karosserie verbunden ist und definiert über seinen oberen Rand die Brüstungslinie B. Es weist Verstärkungsstrukturen (Seitenaufprallschutz, Brüstungsverstärkung) und Befestigungsstrukturen für die Türgriffe (nicht dargestellt) auf.

Das Funktionsmodul 3 ist als Modul einer modular aufgebauten Fahrzeugtür grundsätzlich bekannt. Es weist eine Trägerplatte 3' auf, die im Wesentlichen im Trockenraum anzuordnende elektronische Komponenten trägt (in den Figuren aus Übersichtlichkeitsgründen nicht gezeigt). Damit bildet das Funktionsmodul, insbesondere die vom Funktionsmodul umfasste Trägerplatte 3', die Trennungsebene zwischen Trockenraum und Feuchtraum. Wie aus Figur 1 ersichtlich sind in der Trägerplatte 3' eine Vielzahl von Öffnungen vorgesehen, durch die hindurch an der Trägerplatte 3' angeordnete Funktionskomponenten mit Funktionsteilen im Feuchtraum zusammenwirken können. Bei vollständig montierter Fahrzeugtür sind die Öffnungen zur Trennung von Feucht- und Trockenraum selbstverständlich durch Funktionskomponenten geschlossen.

Wesentlicher Bestandteil der Erfindung ist das Türrahmenmodul 2. Es wird dem Hersteller nach dem Lackierprozess angeliefert und als vormontierte Systembaugruppe mit dem Rohbaumodul 1 durch stoffschlüssige Verbindung, insbesondere Verklebung, und/oder mechanische Verbindungselemente zusammengefügt. Es ist vorzugsweise aus faserverstärktem schwarzem Kunststoff gefertigt und dessen Rahmen besteht aus Leichtbauprofilen. Jedoch kann auch vorgesehen sein, dass ein oberhalb der Brüstungslinie B der komplettierten Fahrzeugtür vorgesehener Fensterrahmen 4 von einem stranggepressten und gebogenen Aluminiumprofil, einem rollprofiliertem Stahlprofil oder einem Kunststoffprofil aus einem gegenüber den anderen Bestandteilen des Türrahmenmoduls anderen Material gebildet ist. Das Türrahmenmodul kann also auch aus einem Verbund von Einzelbauteilen aus verschiedenen Materialien bestehen.

In Figur 1 ist erkennbar, dass Führungsschienen 12 für eine Fensterscheibe ebenso Teil des Türrahmenmoduls 2 sind wie eine Blende 16 für die B-Säule des Kraftfahrzeugs. Ferner weist das Türrahmenmodul 2 als weitere strukturelle Verstärkung ein sich entlang der Brüstungslinie erstreckendes Querprofil 17 auf.

Wie Figur 2 verdeutlicht und wie nachfolgend noch näher erläutert werden wird, wird der oberhalb der Brüstungslinie B liegende Abschnitt der komplettierten Fahrzeugtür ganz wesentlich - in dem in den Figuren gezeigten Beispiel sogar ausschließlich - von Bauteilen gebildet, die Teil des Türrahmenmoduls sind. Unterhalb der Brüstungslinie B bildet das Türrahmenmodul einen über das Querprofil 17 in sich geschlossenen Stützrahmen 5 aus, über den es am Rohbaumodul 1 befestigt ist.

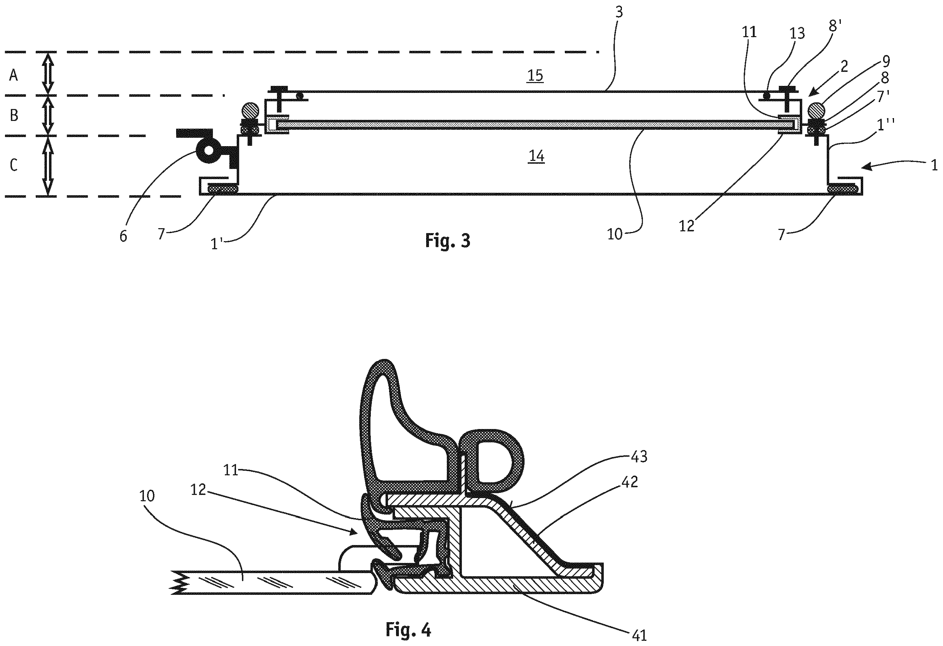

Figur 3 verdeutlicht anhand einer grob schematisierten und auf wesentliche Merkmale reduzierten Darstellung den in Figur 2 gezeigten Schnitt III-III.

Das ganz überwiegend aus einem äußeren Blechformteil 1' und einem inneren Blechformteil 1" bestehende Rohbaumodul 1 bildet die äußere Türfläche und die daran innenseitig angeordneten Strukturen. Äußeres Blechformteil 1' und inneres Blechformteil 1" sind über eine Falz und eine Verklebung oder Verschweißung 7 miteinander verbunden. Ein Türscharnier 6 ist am Rohbaumodul angeordnet. Dieses Rohbaumodul 1 bildet das vom Fahrzeughersteller dem Lackierprozess zuzuführende BIW-Bauteil. Alle anderen Module der Fahrzeugtür werden als vormontierte Systembaugruppen mit hohem Integrationsgrat an die Fertigungslinie geliefert.

Das Türrahmenmodul 2 ist über eine weitere Verklebung 7' und/oder über zusätzlich oder alternativ hierzu vorgesehene mechanische Verbindungselemente 8 an dem Rohbaumodul 1, bevorzugt an dem inneren Blechformteil 1", befestigt. Diese Verbindung kann insbesondere als unlösbare Verbindung ausgeführt sein. Eine Primärdichtung 9, also die an der Fahrzeugtür vorzusehende Hauptdichtung zur Abdichtung des Fahrgastraums, ist ebenfalls am Türrahmenmodul angeordnet. Diese Primärdichtung 9 kann, wie in Figur 3 dargestellt, die mechanischen Verbindungselemente 8 überdecken, damit diese den äußeren Eindruck nicht nachteilig beeinflussen.

Weiter ist in Figur 3 zu erkennen, dass die Fensterscheibe 10 in mit Falldichtungen bzw. Fensterführungsdichtungen 11 versehenen Führungen 12 geführt ist. Die Führungen 12 sind insbesondere auch unterhalb der Brüstungslinie B in das Türrahmenmodul integriert, was die Optimierung der Toleranzen zwischen Dichtungen, Führungen und Fenster ermöglicht, da keine modulübergreifenden Ausrichtfehler bzw. kein modulübergreifender Versatz der Bauteile auftreten kann. Gleiches gilt für weitere Bestandteile der Fensterhebemechanik, die ebenfalls in das Türrahmenmodul integriert sein können. Dies ermöglicht es nicht nur, das Rohbaumodul insgesamt von zahlreichen für die Fensterbedienung erforderlichen Bauteilen freizuhalten, sondern erlaubt außerdem eine optisch gefällige Integration der Fensterscheibe in die Fahrzeugtür, wie etwa eine besonders bündige Aufnahme der Scheibe in den Fensterrahmen. Es wird als besonders vorteilhaft angesehen, wenn die gesamte Fenstermechanik zum Heben und Senken der Fensterscheibe und bevorzugt außerdem auch der Fensterdichtungssatz in das Türrahmenmodul integriert ist.

Auf das Türrahmenmodul 2 aufgesetzt und an diesem befestigt, bevorzugt ausschließlich an diesem befestigt, ist das Funktionsmodul 3, das den zum Fahrzeugäußeren hin liegenden inneren Türkasten 14 als Feuchtraum gegenüber dem zum Fahrzeuginneren liegenden Trockenraum 15 abgrenzt und bevorzugt die beiden Räume über eine Dichtung 13 gegeneinander abdichtet. Die Dichtung 13 ist bevorzugt am Türrahmenmodul angebracht bzw. an diesem vormontiert. Insbesondere kann die Dichtung als auf das Türrahmenmodul aufgebrauchte Dichtungsraupe aus Polyurethanschaum ausgebildet sein. Das Funktionsmodul 3 ist bevorzugt über mechanische Verbindungselemente 8' am Türrahmenmodul befestigt, die weiter bevorzugt als lösbare mechanische Verbindungselemente ausgebildet sind.

Figur 3 verdeutlicht anhand der durch die Buchstaben A, B und C gekennzeichneten Bereiche, dass die modular aufgebaute Fahrzeugtür zumindest drei Modulabschnitte umfasst, die insbesondere auch von verschiedenen Zulieferern hergestellt werden können. Während der Modulabschnitt C typischerweise als BIW-Bauteil vom Fahrzeughersteller selbst hergestellt wird und den Lackierprozess durchläuft, kann Modulabschnitt B, also insbesondere das Türrahmenmodul 2 von einem ersten Zulieferer und Modulabschnitt A, also insbesondere das Funktionsmodul 3, von einem zweiten Zulieferer entwickelt, gefertigt, bestückt und geliefert werden. Da insbesondere diese beiden Module verschiedene Kompetenzen erfordern, ermöglicht die beschriebene Ausgestaltung dem Fahrzeughersteller, die Zulieferer gezielter für jeweilige Module auszuwählen.

Die Integration des Fensterrahmens in das Türrahmenmodul hat zudem den Vorteil, dass der Fensterrahmen nicht in herkömmlicher Blechbauweise aus zwei zusammenzufügenden Metallblechen hergestellt werden muss. Vielmehr kann er auch aus einem stranggepressten und gebogenen Aluminiumprofil oder aus extrudierten, gespritzten, spritzgeprägten, pultrudierten oder spritzgepressten Kunststoffprofilen (bevorzugt faserverstärkt) oder aus einem Stahlrollformteil bestehen. Dies wiederum führt dazu, dass der Profilquerschnitt losgelöst von den konstruktiven Zwängen der bei herkömmlichen Fahrzeugtüren angewandten Herstellungsverfahren entworfen werden kann, was neben den bereits beschriebenen Vorteilen auch eine Maximierung des Fenstersichtbereichs bei gleicher Fensterrahmengröße ermöglicht und damit auch zur Übersichtlichkeit und zur Verkehrssicherheit beiträgt.

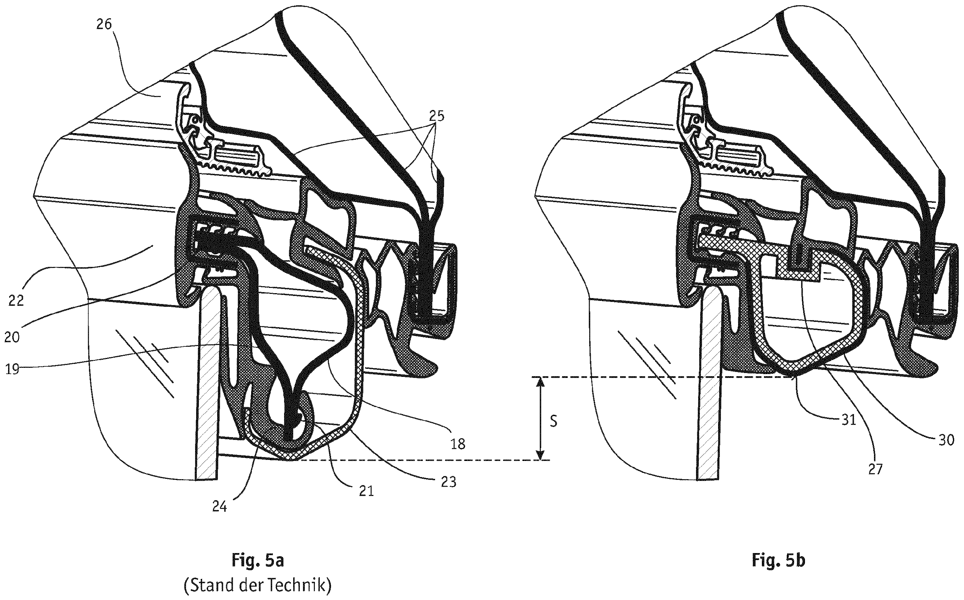

Diesen Aspekt verdeutlichen Figur 5a und Figur 5b, die eine Schnittansicht einer herkömmlichen, aus dem Stand der Technik bekannten Türkonstruktion (Fig. 5a) einer möglichen Türkonstruktion einer nach der Erfindung gefertigten Tür (Fig. 5b) an einer Stelle, die der in Figur 2 angedeuteten Schnittlinie V - V entspricht, gegenüberstellen, wobei in Figur 5a und Figur 5b im Gegensatz zu Figur 2 zu Veranschaulichungszwecken auch die Dachstruktur 25 der Fahrzeugkarosserie sowie eine dieser folgenden umlaufende Zierleiste 26 ersichtlich ist. In Figur 5b ist die noch in Figur 5 a ersichtliche herkömmliche Konstruktion des Fensterrahmens in Blechbauweise durch einen Profilquerschnitt 30 des Fensterrahmens ersetzt, wie er bei einem erfindungsgemäßen Türrahmenmodul ausgebildet sein kann.

In Figur 5a ist erkennbar, dass der aus zwei in herkömmlicher Weise zusammengefügten Blechteilen 18 und 19 des Rohbaumoduls bestehende Fensterrahmen zwei Fügeflansche 20 und 21 aufweist. Während der obere Fügeflansch 20 dazu dient, eine Dichtung 22 zu halten, hat der untere Fügeflansch 21 keine nennenswerte Funktion, sondern muss durch eine Blende 23, die den Flansch umgreift, auf der zum Fahrzeuginneren weisenden Seite optisch kaschiert werden. Ein unterer Bereich 24 des Dichtungsprofils 22 umgreift den Fügeflansch 21 außerdem, um die Blende 23 vibrationssicher zu halten und um etwaige Geräusche, die bei Kontakt von Fügeflansch 21 und Blende 23 auftreten könnten, zu verhindern.

Der diese herkömmliche Konstruktion ersetzende Profilquerschnitt 30 eines erfindungsgemäßen Türrahmenmoduls verdeutlicht die Vorteile, die sich bieten, wenn der Fensterrahmen losgelöst von den konstruktiven Zwängen des Rohbaumoduls nicht in herkömmlicher Blechbauweise, sondern wie zuvor beschrieben hergestellt werden kann.

Zum einen entfällt der untere Fügeflansch 21 vollständig weg, was dazu führt, dass der untere Dichtungsbereich 24 sowie die Blende 23 gänzlich entfallen kann. Letzteres ist auch dadurch möglich, dass die äußere Oberfläche 31 wie weiter oben beschrieben unmittelbar eine Dekorfläche ausbildet, die nicht durch eine zusätzliche Blende kaschiert werden muss. Es können also Bauteile entfallen und die Konstruktion wird insgesamt vereinfacht. Figur 5b verdeutlicht dabei die Verwendung eines Mehrkomponenten-Bauteils als Fensterrahmen, bei dem der eigentliche Profilquerschnitt 30 von einem ersten Material gebildet wird, während die sichtbaren Dekorflächen 31 von einem zweiten Material, das auf das erste Material aufgebracht ist, gebildet werden.

Zum anderen verdeutlichen die beiden den Bereich S definierenden gestrichelten Linien in der Gegenüberstellung von Figur 5a und Figur 5b, dass durch den Wegfall des zwischen diesen Linien liegenden Bereichs S des herkömmlich ausgebildeten Fensterrahmens aus Figur 5a der Fenstersichtbereich oberhalb der Brüstungslinie umlaufend maximiert werden kann. Der Querschnitt des den Fensterrahmen bildenden Profilteils 30 weist keinen dem unteren Fügeflansch 21 in Figur 5a entsprechenden Fortsatz oder Vorsprung auf, der den Fenstersichtbereich minimieren würde. Die den Fenstersichtbereich definierende äußere Oberfläche 31' des Querschnitts ist vielmehr eben und weitgehend senkrecht und/oder parallel zur Fensterscheibe ausgerichtet.

Figur 4 zeigt einen weiteren möglichen Querschnitt des Türrahmens an der in Figur 2 angedeuteten Schnittlinie IV - IV, der alternativ zu dem in Figur 5b gezeigten Querschnitt vorgesehen sein kann und der ebenfalls verdeutlicht, welche Vorteile ein losgelöst von der ansonsten erforderlichen Blechbauweise herstellbarer Fensterrahmen haben kann.

Eine Blendenleiste 41 ist als zum Fahrzeugäußeren weisendes Profilteil auf ein Grundprofil 42 aufgesetzt, insbesondere mit diesem stoffschlüssig verbunden, also insbesondere aufgeklebt oder verschweißt. Diese beiden Bauteile, die insbesondere auch aus verschiedenen Materialien hergestellt sein können, bilden gemeinsam ein Hohlprofil aus, das dem Fensterrahmen die eigentliche Stabilität verleiht. Das zum Fahrzeuginneren weisende Grundprofil 42 ist als Mehrkomponenten-Bauteil mehrschichtig ausgeführt. Die Grundgeometrie des Grundprofils 42 wird maßgeblich durch ein erstes Material bestimmt, während auf die zum Fahrzeuginneren weisende Sichtseite 43 des Grundprofils 42 eine aus einem zweiten Material bestehende zweite Komponente aufgebracht ist. Ein derartiges Mehrkomponenten-Bauteil kann mittels eines der bereits beschriebenen Verfahren hergestellt werden.

Ferner zeigt Figur 4, dass Bauteile wie die außen auf das Grundprofil 42 aufgesetzte Blendenleiste 41, die bei herkömmlichen Konstruktionen lediglich eine optische, mit Blick auf etwaige daran angeordnete Dichtungen gegebenenfalls noch eine funktionale Aufgabe erfüllen, indem sie lediglich auf die tragende Struktur des Rohbaumoduls aufgesetzt sind, bei der in Figur 4 gezeigten Konstruktion eine die mechanische Grundstabilität gewährleistende tragende Funktion übernehmen können. Die die zum Fahrzeugäußeren weisende Dekorfläche der Fahrzeugtür wird in diesem Fall unmittelbar von einer Oberfläche des Fensterrahmens des Türrahmenmoduls gebildet.

Weiter verdeutlichen Figur 4 und Figur 5b, dass dadurch, dass auch der tragende Teil des Fensterrahmens, sei er nun wie in Figur 4 durch ein Grundprofil 42 und eine hierauf aufgesetzte Blendenleiste 41 mehrteilig aufgebaut, oder alternativ hierzu wie in Figur 5b dargestellt, als einteiliges Hohlprofil konzipiert, auch Hinterschnitte oder sonstige geometrisch eindeutige Vertiefungen, Nuten oder Ähnliches aufweisen können, was in herkömmlicher Blechbauweise nicht ohne weiteres möglich wäre. Damit kann zum Beispiel unmittelbar an den den Fensterrahmen bildenden Profilteilen eine Aufnahmenut 27 für Dichtungen vorgesehen sein. Zusätzliche Bauteile, die dies im Zusammenspiel mit einem herkömmlichen Fensterrahmen in Blechbauweise erst ermöglichen würden, etwa klassische Blendenleisten, die mittels mechanischer Verbindungsmittel auf den Fensterrahmen aufgesetzt sind, können entfallen.

### Bezugszeichenliste

- 1: Rohbaumodul
- 1': äußeres Blechformteil
- 1": inneres Blechformteil
- 2: Türrahmenmodul
- 3: Funktionsmodul
- 3': Trägerplatte
- 4: Fensterrahmen
- 5: Stützrahmen
- 6: Türscharnier
- 7: Verklebung
- 8: mechanische Verbindungselemente
- 9: Primärdichtung
- 10: Fensterscheibe
- 11: Fensterfalldichtung
- 12: Fensterscheibenführung
- 13: Dichtung
- 14: innerer Türkasten/Feuchtraum
- 15: Trockenraum
- 16: Säulenblende
- 17: Querprofil
- 18,19: den Fensterrahmen bildende Blechteile des Rohbaumoduls
- 20,21: Fügeflansche
- 22: Dichtungsprofil
- 23: Blende
- 24: unterer Bereich des Dichtungsprofils 22
- 25: Dachstruktur der Karosserie
- 26: Zierleiste
- 27: Aufnahmenut für Dichtung
- 30: Profilquerschnitt
- 31: Dekorflächen des Profilquerschnitts 30
- 41: Blendenleiste
- 42: Grundprofil des Fensterrahmens
- 43: Sichtseite des Grundprofils

## Patentansprüche

1. Türrahmenmodul (2) zur Anbringung an ein bei komplettierter Fahrzeugtür eine Brüstungslinie (B) definierendes Rohbaumodul (1), wobei das Türrahmenmodul (2) ein Rahmenteil umfasst, das oberhalb der Brüstungslinie (B) einen Fensterrahmen (4) und unterhalb der Brüstungslinie (B) einen Stützrahmen (5) ausbildet, über den das Türrahmenmodul (2) bestimmungsgemäß innenseitig am Rohbaumodul (1) zur weiteren Komplettierung der Fahrzeugtür zu befestigen ist, wobei das Türrahmenmodul (2) ausgebildet ist, als vom Rohbaumodul (1) separates Bauteil an dem endlackierten Rohbaumodul (1) befestigt zu werden, und der Stützrahmen (5) ausgebildet ist, ein vom Türrahmenmodul (2) separates und als Komponententräger dienendes Funktionsmodul (3) zu tragen, **dadurch gekennzeichnet, dass,**
das Türrahmenmodul (2) aus Kunststoff hergestellt ist und hoch belastete Bereiche des Stützrahmens (5) oder des Fensterrahmens (4) durch Verstärkungselemente verstärkt sind.

2. Türrahmenmodul nach Anspruch 1, **dadurch gekennzeichnet, dass** die Verstärkungselemente Metallblecheinleger, Organobleche oder Langfasermatten sind.

3. Türrahmenmodul nach einem der beiden vorhergehenden Ansprüche, **dadurch gekennzeichnet, dass** das Türrahmenmodul (2) aus einem einzigen, einstückigen Formbauteil besteht.

4. Türrahmenmodul nach einem der vorhergehenden Ansprüche, **dadurch gekennzeichnet, dass** der Stützrahmen (5) und der Fensterrahmen (4) ein umlaufendes Rahmenteil bilden.

5. Türrahmenmodul nach einem der vorhergehenden Ansprüche, **dadurch gekennzeichnet, dass** der Fensterrahmen (4) Dekorflächen bildet.

6. Türrahmenmodul nach dem vorhergehenden Anspruch, **dadurch gekennzeichnet, dass** Bestandteile des Türrahmenmoduls (2), die die Dekorflächen bilden, als Mehrkomponenten-Bauteile ausgebildet sind und zumindest in dem die Dekorflächen bildenden Bereich einen mehrschichtigen Aufbau mit zumindest einer ersten, inneren Schicht aus einem ersten Material und einer zweiten, äußeren Schicht aus einem zweiten Material aufweisen.

7. Türrahmenmodul nach einem der vorhergehenden Ansprüche, **dadurch gekennzeichnet, dass** eine Säulenblende (16) integraler Bestandteil des Türrahmenmoduls (2) ist.

8. Türrahmenmodul nach einem der vorhergehenden Ansprüche, **dadurch gekennzeichnet, dass** der Stützrahmen (5) unterhalb der Brüstungslinie (B) eine Türkastenbegrenzung bildet, wobei der Türkasten bei komplettierter Fahrzeugtür einen Feuchtraum (14) definiert.

9. Türrahmenmodul nach einem der vorhergehenden Ansprüche, **dadurch gekennzeichnet, dass** der Fensterrahmen (4) mehrteilig aufgebaut ist und ein Grundprofil (42) aufweist, auf den ein Abdeckteil in Form eines Zierteils oder eine Blendenleiste (41) aufgesetzt ist.

10. Türrahmenmodul nach einem der Ansprüche 1 bis 7, **dadurch gekennzeichnet, dass** der tragende Teil des Fensterrahmens (4) (4) als einteiliges Hohlprofil konzipiert ist.

11. Türrahmenmodul nach einem der vorhergehenden Ansprüche, **dadurch gekennzeichnet, dass** das Türrahmenmodul (2) ein sich entlang der Brüstungslinie erstreckendes Querprofil (17) aufweist.

12. Türrahmenmodul nach dem vorhergehenden Anspruch, **dadurch gekennzeichnet, dass** das Querprofil (17) einstückig mit dem Stützrahmen (5) ausgebildet ist oder diesen als ursprünglich separates Bauteil komplettieret und mit dem Stützrahmen (5) einen umlaufenden, unter der Brüstungslinie liegenden Aufsetzrahmen bildet, über den das Türrahmenmodul (2) am Rohbaumodul (1) gehalten und befestigt wird.

13. Modular aufgebaute Fahrzeugtür eines Kraftfahrzeugs mit einem die äußere Karosseriehaut der Tür bildenden Rohbaumodul (1), das eine Brüstungslinie (B) definiert, mit einem Türrahmenmodul (2)nach einem der vorhergehenden Ansprüche, **dadurch gekennzeichnet, dass** das Türrahmenmodul (2) als vom Rohbaumodul (1) ursprünglich separates Bauteil innenseitig an dem Rohbaumodul (1) befestigt ist.

14. Fahrzeugtür nach dem vorhergehenden Anspruch, **dadurch gekennzeichnet, dass** die Fahrzeugtür ein Funktionsmodul (3) aufweist, das als Komponententräger auf das Türrahmenmodul (2) aufgesetzt ist.

15. Fahrzeugtür nach Anspruch 14, **dadurch gekennzeichnet, dass** das Funktionsmodul ausschließlich am Türrahmenmodul und nicht am Rohbaumodul befestigt ist.

## Claims

1. Door frame module (2) for fitting to a carcass module (1) defining a railing line (B) when a vehicle door is complete, wherein the door frame module (2) comprises a frame part that forms a window frame (4) above the railing line (B) and a support frame (5) below the railing line (B), via which the door frame module (2) is fitted to the inside of the carcass module (1) for the further completion of the vehicle door as intended, wherein the door frame module (2) is designed to be fitted to the final sprayed carcass module (1) as a component that is separate from the carcass module (1), and the support frame (5) is designed to support a functional module (3) that is separate from the door frame module (2) and serves as a component support, **characterised in that** the door frame module (2) is made of plastic and the areas of the support frame (5) or the window frame (4) which are subject to great loads are reinforced with reinforcement elements.

2. Door frame module according to claim 1, **characterised in that** the reinforcement elements are sheet metal inserts, organic sheets or long-fibre mats.

3. Door frame module according to one of the two preceding claims, **characterised in that** the door frame module (2) consists of one single-piece moulded component.

4. Door frame module according to one of the preceding claims, **characterised in that** the support frame (5) and the window frame (4) form a circumferential frame part.

5. Door frame module according to one of the preceding claims, **characterised in that** the window frame (4) forms decorative surfaces.

6. Door frame module according to the preceding claim, **characterised in that** parts of the door frame module (2) that form the decorative surfaces are designed as multi-component parts and have a multi-layered construction with at least one first, inner layer made of a first material, and a second, outer layer made of a second material at least in the area in which the area forming the decorative surfaces.

7. Door frame module according to one of the preceding claims, **characterised in that** a column trim (16) is an integral part of the door frame module (2).

8. Door frame module according to one of the preceding claims, **characterised in that** the support frame (5) forms a door box delimitation below the railing line (B), wherein the door box defines a moisture space (14) when the vehicle door is complete.

9. Door frame module according to one of the preceding claims, **characterised in that** he window frame (4) is of a multi-part design and has a base profile (42), on which a cover part in the form of a trim component or a cover shroud (41) is mounted.

10. Door frame module according to one of the claims 1 to 7, **characterised in that** the supporting part of the window frame (4) (4) is structured as a single-component hollow profile.

11. Door frame module according to one of the preceding claims, **characterised in that** the door frame module (2) has a transverse profile (17) extending along the railing line.

12. Door frame module according to the preceding claim, **characterised in that** the transverse profile (17) is designed of a single piece with the support frame (5) or completes the same as an originally separate component, and forms a circumferential mounting frame lying below the railing line with the support frame (5), via which the door frame module (2) is held on and fitted to the carcass module (1).

13. Modular construction vehicle door of a motor vehicle with a carcass module (1) forming the outer chassis skin of the door, which defines a railing line (B), with a door frame module (2) according to one of the preceding claims, **characterised in that** the door frame module (2) is fitted to the inside of the carcass module (1) as a component that is originally separate from the carcass module (1).

14. Vehicle door according to the preceding claim, **characterised in that** the vehicle door has a functional module (3), which is mounted on the door frame module (2) as a component carrier.

15. Vehicle door according to claim 14, **characterised in that** the functional module is fitted only to the door frame module and not to the carcass module.

## Revendications

1. Module de cadre de porte (2) en vue de la pose sur un module de carrosserie brut (1) définissant une ligne de caisse (B) lors de porte de véhicule complétée, le module de cadre de porte (2) comprenant un élément de cadre, qui forme un cadre de fenêtre (4) au-dessus de la ligne de caisse (B) et un cadre support (5) en dessous de la ligne de caisse (B), sur lequel le module de cadre de porte (2) doit être fixé conformément côté intérieur au module de carrosserie brut (1) pour une finalisation supplémentaire de la porte de véhicule, le module de cadre de porte (2) étant formé de manière à être fixé au module de carrosserie brut (1) peint comme un composant séparé du module de carrosserie brut (1), et le cadre support (5) étant formé de manière à porter un module fonctionnel (3) séparé du module de cadre de porte (2) et servant de support de composant, **caractérisé en ce que** le module de cadre de porte (2) est fabriqué en plastique et que des zones hautement sollicitées du cadre support (5) ou du cadre de fenêtre (4) sont renforcées par des éléments de renforcement.

2. Module de cadre de porte selon la revendication 1, **caractérisé en ce que** les éléments de renforcement sont des pièces d'insertion en tôle métalliques, tôles organiques ou tapis en fibres longitudinaux.

3. Module de cadre de porte selon l'une des deux revendications précédentes, **caractérisée en ce que** le module de cadre de porte (2) est formé d'un composant moulé unique d'une seule pièce.

4. Module de cadre de porte selon l'une des revendications précédentes, **caractérisé en ce que** le cadre support (5) et le cadre de fenêtre (4) forment un élément de cadre circonférentiel.

5. Module de cadre de porte selon l'une des revendications précédentes, **caractérisé en ce que** le cadre de fenêtre (4) forme des surfaces décoratives.

6. Module de cadre de porte selon la revendication précédente, **caractérisé en ce que** les composants du module de cadre de porte (2), qui forment les surfaces décoratives, sont formés comme des composants multiconstituants et présentent au moins dans la zone formant les surfaces décoratives une structure multicouche avec au moins une première couche intérieure en un premier matériau et une deuxième couche extérieure en un deuxième matériau.

7. Module de cadre de porte selon l'une des revendications précédentes, **caractérisé en ce qu'**un cache de colonne (16) est un composant intégral du module de cadre de porte (2).

8. Module de cadre de porte selon l'une des revendications précédentes, **caractérisé en ce que** le cadre support (5) forme une limitation d'encadrement de porte en dessous de la ligne de caisse (B), l'encadrement de porte définissant un espace humide (14) lors de porte de véhicule complétée.

9. Module de cadre de porte selon l'une des revendications précédentes, **caractérisé en ce que** le cadre de fenêtre (4) est composé de plusieurs pièces et présente un profil de base (42) sur lequel est posé une pièce de recouvrement sous la forme d'une moulure ou baguette d'obturation (41).

10. Module de cadre de porte selon l'une des revendications 1 à 7, **caractérisé en ce que** la partie portante du cadre de fenêtre (4) (4) est conçue comme un profil creux d'une seule pièce.

11. Module de cadre de porte selon l'une des revendications précédentes, **caractérisé en ce que** le module de cadre de porte (2) présente un profil transversal (17) s'étendant le long de la ligne de caisse.

12. Module de cadre de porte selon la revendication précédente, **caractérisé en ce que** le module transversal (17) est formé d'une seule pièce avec le cadre support (5) ou compète celui-ci comme composant séparé à l'origine et forme avec le cadre support (5) un cadre de rehausse circonférentiel posé en dessous de la ligne de caisse, sur lequel le module de cadre de porte (2) est maintenu et fixé au module de carrosserie brut (1).

13. Porte de véhicule à structure modulaire d'une automobile avec un module de carrosserie brut (1) formant la carrosserie extérieure de la porte, qui définit une ligne de caisse (B), avec un module de cadre de porte (2) selon l'une des revendications précédentes, **caractérisée en ce que** le module de cadre de porte (2) est fixé côté intérieur au module de carrosserie brut (1) comme composant séparé à l'origine du module de carrosserie brut (1).

14. Porte de véhicule selon la revendication précédente, **caractérisée en ce que** la porte de véhicule présente un module fonctionnel (3) qui est posé sur le module de cadre de porte (2) comme support de composant.

15. Porte de véhicule selon la revendication 14, **caractérisée en ce que** le module fonctionnel est fixé exclusivement au module de cadre de porte et non au module de carrosserie brut.
